(19) Europäisches Patentamt
European Patent Office
Office européen des brevets

(11) **EP 3 157 962 B1**

(12) **EUROPÄISCHE PATENTSCHRIFT**

(45) Veröffentlichungstag und Bekanntmachung des Hinweises auf die Patenterteilung:
**10.04.2019   Patentblatt 2019/15**

(51) Int Cl.:
**C08F 2/10** (2006.01)          **C08F 220/06** (2006.01)
**B01J 4/00** (2006.01)

(21) Anmeldenummer: **15727421.8**

(22) Anmeldetag: **10.06.2015**

(86) Internationale Anmeldenummer:
**PCT/EP2015/062895**

(87) Internationale Veröffentlichungsnummer:
**WO 2015/197359 (30.12.2015 Gazette 2015/52)**

(54) **VORRICHTUNG ZUR HERSTELLUNG VON PULVERFÖRMIGEM POLY(METH)ACRYLAT**

APPARATUS FOR PRODUCTION OF PULVERULENT POLY(METH)ACRYLATE

DISPOSITIF DE FABRICATION DE POLY(MÉTH)ACRYLATE PULVÉRULENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2014   EP 14173487**

(43) Veröffentlichungstag der Anmeldung:
**26.04.2017   Patentblatt 2017/17**

(73) Patentinhaber: **BASF SE**
**67056 Ludwigshafen am Rhein (DE)**

(72) Erfinder:
• **DAISS, Andreas**
**67061 Ludwigshafen (DE)**
• **BAYER, Robert**
**74889 Sinsheim (DE)**
• **SCHLIWA, Rudolf**
**63755 Alzenau (DE)**
• **FREIBERG, Jürgen**
**68623 Lampertheim (DE)**
• **POSSEMIERS, Karl J.**
**B-67346 Speyer (BE)**
• **KRÜGER, Marco**
**68219 Mannheim (DE)**

(56) Entgegenhaltungen:
**US-A1- 2011 237 754**

**Beschreibung**

Die Erfindung betrifft eine Vorrichtung zur Herstellung von pulverförmigem Poly(meth)acrylat, umfassend einen Reaktor zur Tropfenpolymerisation mit einer Vorrichtung zur Vertropfung einer Monomerlösung für die Herstellung des Poly(meth)acrylats mit Löchern, durch die die Lösung vertropft wird, einer Zugabestelle für ein Gas oberhalb der Vorrichtung zur Vertropfung, mindestens einer Gasentnahmestelle am Umfang des Reaktors und einer Wirbelschicht.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Nachteil bei allen Verfahren, die nach dem Prinzip der Tropfenpolymerisation durchgeführt werden, bei denen Monomerlösung in Tropfen zerfällt und in einem Reaktor unter Bildung des Polymeren nach unten fällt, ist, dass Tropfen beim Zusammenprall koaleszieren können und auch an die Wandung des Reaktors prallende Tropfen anhaften können und so zu einer ungewünschten Belagsbildung führen können. Zudem ist bei einem Scale-up auf großindustrielle Maßstäbe eine Vergrößerung der Wirbelschicht notwendig, was zu einem stark zunehmenden Energieverbrauch führt.

Aufgabe der vorliegenden Erfindung ist es daher, einen Reaktor zur Tropfenpolymerisation bereitzustellen, bei dem eine Belagsbildung durch an die Wandungen prallende Tropfen minimiert wird und bei dem zudem im großtechnischen Maßstab der Energiebedarf möglichst gering gehalten werden kann.

Gelöst wird die Aufgabe durch eine Vorrichtung zur Herstellung von pulverförmigem Poly(meth)acrylat, umfassend einen Reaktor zur Tropfenpolymerisation mit einer Vorrichtung zur Vertropfung einer Monomerlösung für die Herstellung des Poly(meth)acrylats mit Löchern, durch die die Lösung vertropft wird, einer Zugabestelle für ein Gas oberhalb der Vorrichtung zur Vertropfung, mindestens einer Gasentnahmestelle am Umfang des Reaktors und einer Wirbelschicht, wobei die äußersten Löcher, durch die die Lösung vertropft wird, so positioniert sind, dass ein senkrecht nach unten fallender Tropfen in die Wirbelschicht fällt und dass der hydraulische Durchmesser auf Höhe der Mitte zwischen der Vorrichtung zur Vertropfung und der Gasentnahmestelle mindestens 10% größer ist als der hydraulische Durchmesser der Wirbelschicht, wobei sich der Reaktor oberhalb der Wirbelschicht konusförmig auf seinen maximalen hydraulischen Durchmesser erweitert und die mindestens eine Gasentnahmestelle am Übergang von der konusförmigen Erweiterung oberhalb der Wirbelschicht zur zylindrischen Wandung des Reaktors positioniert ist, wobei der Durchmesser der konusförmigen Erweiterung oberhalb der Wirbelschicht am oberen Ende der Erweiterung größer ist als der Durchmesser der Reaktorwandung oberhalb der konusförmigen Erweiterung, wobei die Reaktorwandung in die konusförmige Erweiterung ragt, so dass sich zwischen der konusförmigen Erweiterung und der Reaktorwandung ein ringförmiger Raum ausbildet, an dem die Gasentnahmestelle positioniert ist.

Durch die Gestaltung des Reaktors zur Tropfenpolymerisation derart, dass der hydraulische Durchmesser auf Höhe der Mitte zwischen der Vorrichtung zur Vertropfung und der Gasentnahmestelle mindestens 10% größer ist als der hydraulische Durchmesser der Wirbelschicht, wird gewährleistet, dass nur ein kleiner Teil der Tropfen die Wand erreicht und dies erst nach einer Verweilzeit erfolgt, zu der die Tropfen nicht mehr klebrig sind. Des weiteren wird dadurch, dass die äußersten Löcher, durch die die Lösung vertropft wird, so positioniert sind, dass ein senkrecht nach unten fallender Tropfen in die Wirbelschicht fällt, vermieden, dass Tropfen gegen die Wandung prallen und dort anhaften, wodurch sich ein Belag bildet.

Der hydraulische Durchmesser $d_h$ berechnet sich zu:

$$d_h = 4 \cdot A/U$$

wobei A die Fläche und U der Umfang ist. Durch die Verwendung des hydraulischen Durchmessers ist die Gestaltung des Reaktors unabhängig von der Form der Querschnittsfläche. Diese kann zum Beispiel kreisförmig, rechteckig, in Form eines beliebigen Polygons, oval oder elliptisch sein. Bevorzugt ist jedoch eine kreisförmige Querschnittsfläche.

Damit die Monomerlösung, die die Vorrichtung zur Vertropfung verlässt, nicht an die Wandung des Reaktors gesprüht wird und um gleichzeitig den Reaktor sowohl statisch als auch vom Materialaufwand vorteilhaft zu gestalten, ist es bevorzugt, den Kopf des Reaktors in Form eines Kegelstumpfs auszubilden und die Vorrichtung zur Vertropfung im kegelstumpfförmigen Kopf des Reaktors zu positionieren.

Durch die kegelstumpfförmige Gestaltung des Kopfs des Reaktors kann im Vergleich zu einer zylindrischen Gestaltung Material eingespart werden. Zudem dient ein kegelstumpfförmig gestalteter Kopf zur Verbesserung der statischen Stabilität des Reaktors. Ein weiterer Vorteil ist, dass das Gas, das am Kopf des Reaktors eingebracht wird, über einen kleineren Querschnitt zugeführt werden muss und anschließend aufgrund der kegelstumpfförmigen Gestaltung ohne starke Verwirbelungen im Reaktor nach unten strömt. Die Verwirbelungen, die sich bei einer zylindrischen Gestaltung des Reaktors im Kopfbereich und einer Gaszufuhr in der Mitte des Reaktors einstellen können, haben den Nachteil, dass Tropfen, die mit der Gasströmung mitgerissen werden, aufgrund der Verwirbelungen gegen die Wandung des Reaktors transportiert werden können und so zur Belagbildung beitragen können.

Um die Höhe des Reaktors so niedrig wie möglich zu halten, ist es weiterhin vorteilhaft, wenn die Vorrichtung zur Vertropfung der Monomerlösung so weit oben wie möglich im kegelstumpfförmig gestalteten Kopf angeordnet ist. Das bedeutet, dass die Vorrichtung zur Vertropfung der Monomerlösung auf der Höhe des kegelstumpfförmig gestalteten Kopfes angeordnet ist, in der der Durchmesser des kegelstumpfförmig gestalteten Kopfes ungefähr dem Durchmesser der Vorrichtung zur Vertropfung entspricht.

Um zu vermeiden, dass die Monomerlösung, die die Vorrichtung zur Vertropfung im Bereich der äußersten Löcher verlässt, gegen die Wandung des kegelstumpfförmig gestalteten Kopfes gesprüht wird, ist es besonders bevorzugt, wenn der hydraulische Durchmesser des kegelstumpfförmig gestalteten Kopfes in der Höhe, in der der Vorrichtung zur Vertropfung angeordnet ist, 2 bis 30 %, mehr bevorzugt 4 bis 25 % und insbesondere 5 bis 20 %, größer ist als der hydraulische Durchmesser, der zu der Fläche gehört, die durch eine die äußersten Löcher verbindende Linie umschlossen wird. Der etwas größere hydraulische Durchmesser des Kopfes stellt zudem sicher, dass Tropfen auch unterhalb des Reaktorkopfes nicht frühzeitig an die Reaktorwand prallen und dort anhaften.

Erfindungsgemäß erweitert sich der Reaktor oberhalb der Wirbelschicht konusförmig auf seinen maximalen hydraulischen Durchmesser. Die konusförmige Erweiterung hat den Vorteil, dass Polymerpartikel, die sich aus den Tropfen während ihres Falles durch Polymerisation der Monomerlösung gebildet haben, in die Wirbelschicht fallen können ohne zusammen mit dem Abgas aus dem Reaktor abgesaugt zu werden. Polymerpartikel, die direkt auf der konusförmigen Erweiterung auftreffen, können mit Unterstützung durch geeignete Klopfer außen an dem konusförmigen Teil des Reaktors in die Wirbelschicht rutschen.

Durch die Zugabestelle für Gas oberhalb der Vorrichtung zur Vertropfung der Monomerlösung strömen Gas und Tropfen im Gleichstrom von oben nach unten durch den Reaktor. Da sich im unteren Bereich des Reaktors die Wirbelschicht befindet, führt dies dazu, dass im unteren Bereich des Reaktors Gas in die entgegengesetzte Richtung von unten nach oben strömt. Da Gas sowohl von oben als auch von unten in den Reaktor eingebracht wird, ist es notwendig, das Gas zwischen der Vorrichtung zur Vertropfung der Monomerlösung und der Wirbelschicht zu entnehmen. Die Gasentnahmestelle ist am Übergang von der konusförmigen Erweiterung oberhalb der Wirbelschicht zur zylindrischen Wandung des Reaktors positioniert. Durch die entsprechende Querschnittserweiterung auf den maximalen Reaktordurchmesser auf Höhe der Gasentnahmestelle wird ein Partikelmitriss in das Reaktorabgas verhindert. Die Querschnittsfläche des Gasentnahmeringes ist dabei so groß, dass die mittlere Gasgeschwindigkeit im Ring 0.25 bis 3 m/s, bevorzugt 0.5 bis 2.5 m/s und insbesondere 1.0 bis 1.8 m/s beträgt. Kleinere Werte verringern zwar den Partikelmitriss, führen jedoch zu unwirtschaftlich großen Dimensionen, größere Werte führen zu einem unerwünscht hohen Partikelmitriss.

Der Bereich des Reaktors, an dem die Gasentnahmestelle positioniert ist, ist dabei so gestaltet, dass der Durchmesser der konusförmigen Erweiterung an deren oberen Ende größer ist als der Durchmesser des oberen Teils des Reaktors. Das von oben durch den Reaktor strömende Gas umströmt das untere Ende der Reaktorwandung des oberen Teils und wird über mindestens einen Gasabzug aus dem zwischen dem oberen Ende der konusförmigen Erweiterung und dem in die konusförmige Erweiterung hineinragenden unteren Ende der Reaktorwandung gebildeten ringförmigen Raum entnommen. An den Gasabzug ist eine Vorrichtung zur Abtrennung von Feststoffen angeschlossen, in der Polymerpartikel, die mit der Gasströmung aus dem Reaktor abgezogen werden, abgetrennt werden können. Als Vorrichtung zur Abtrennung von Feststoffen eignen sich zum Beispiel Filter oder Fliehkraftabscheider, beispielsweise Zyklone. Besonders bevorzugt sind Zyklone.

Der hydraulische Durchmesser der Wirbelschicht wird erfindungsgemäß so gewählt, dass die Fläche der Wirbelschicht mindestens so groß ist, dass ein senkrecht nach unten fallender Tropfen aus den äußersten Löchern der Vorrichtung zur Vertropfung in die Wirbelschicht fällt. Hierzu ist die Fläche der Wirbelschicht mindestens genauso groß und genauso geformt wie die Fläche, die von einer die äußersten Löcher der Vorrichtung zur Vertropfung verbindenden Linie gebildet wird. Weiterhin ist es auch möglich, dass die Oberfläche der Wirbelschicht größer ist als die Fläche, die von der die äußersten Löcher der Vorrichtung zur Vertropfung verbindenden Linie gebildet wird. Besonders bevorzugt ist es dabei, wenn die Oberfläche der Wirbelschicht 5 bis 50 %, mehr bevorzugt 10 bis 40 % und insbesondere 15 bis 35 % größer ist als die von der die äußersten Löcher der Vorrichtung zur Vertropfung verbindenden Linie gebildete Fläche. Hierbei entspricht die Form der Oberfläche der Wirbelschicht jeweils der Form der Fläche, die von der die äußersten Löcher verbindenden Linie umschlossen wird. Wenn zum Beispiel die Oberfläche der Wirbelschicht kreisförmig ist, ist auch die von der die äußersten Löcher verbindenden Linie umschlossene Fläche kreisförmig, wobei der Durchmesser der Oberfläche der Wirbelschicht größer sein kann als der Durchmesser der Fläche, die von der die äußersten Löcher der Vorrichtung zur Vertropfung verbindenden Linie gebildet wird.

Üblicherweise tritt die Monomerlösung in Form eines Flüssigkeitsstrahls aus den Löchern der Vorrichtung zur Vertropfung aus, der dann im Reaktor in Tropfen zerfällt. Der Zerfall des Flüssigkeitsstrahls hängt zum einen von der Menge der Flüssigkeit ab, die durch die Löcher pro Zeiteinheit austritt, zum anderen von der Geschwindigkeit und Menge des durch den Reaktor strömenden Gases. Weiterhin beeinflussen die Stoffeigenschaften der Monomerlösung und die Geometrie der Löcher die Art des Strahlzerfalles. Im Rahmen der vorliegenden Erfindung wird der Tropfenzerfall auch als Eintropfen oder Vertropfen bezeichnet.

Damit genug Gas an der Vorrichtung zur Vertropfung der Monomerlösung vorbeiströmen kann, so dass eine gleichmäßige Gasgeschwindigkeit im Reaktor erzielt werden kann und keine zu große Beschleunigung und Verwirbelung des Gases beim Umströmen der Vorrichtung erfolgt, ist es weiterhin bevorzugt, wenn das Verhältnis der von der Vorrichtung zur Vertropfung abgedeckten Fläche in dem Reaktor bezogen auf die Fläche, die von der die äußersten Löcher verbindenden Linie umschlossen wird, kleiner als 50% ist und bevorzugt im Bereich zwischen 3 und 30 % liegt.

Weiterhin ist es bevorzugt, wenn die Anzahl der Löcher bezogen auf die Fläche, die durch die die äußersten Löcher verbindende Linie gebildet wird, im Bereich von 100 bis 1000 Löchern/m$^2$, bevorzugt im Bereich von 150 bis 800 Löcher/m$^2$ und insbesondere im Bereich von 200 bis 500 Löcher/m$^2$ liegt. Hierdurch wird sichergestellt, dass die an den Löchern gebildeten Tropfen einen ausreichend großen Abstand voneinander haben und zudem ausreichend mit dem durch den Reaktor strömenden Gas in Kontakt kommen können.

In einer Ausführungsform umfasst die Vorrichtung zur Vertropfung der Monomerlösung Kanäle, an deren Unterseite die Löcher ausgebildet sind und die sternförmig angeordnet sind. Durch die sternförmige Anordnung der Kanäle ist es insbesondere in einem Reaktor mit kreisförmigem Querschnitt möglich, eine gleichmäßige Verteilung der Tropfen im Reaktor zu erhalten. Die Zugabe erfolgt durch die Kanäle, in die die Monomerlösung eingeleitet wird. Durch die Löcher an der Unterseite der Kanäle tritt die Flüssigkeit aus und bildet die Tropfen.

Damit die aus den Kanälen austretenden Tropfen schnellstmöglich mit dem die Kanäle umströmenden Gas in Kontakt kommen, ist es weiterhin bevorzugt, wenn die Kanäle eine möglichst geringe Breite aufweisen. Die Breite der Kanäle liegt dabei vorzugsweise im Bereich von 25 bis 500 mm, weiter bevorzugt im Bereich von 100 bis 400 mm und insbesondere im Bereich von 150 bis 350 mm.

Die Anzahl N$_{RL}$ der einzelnen Kanäle bei einer sternförmigen Anordnung ist abhängig vom Umfang U des Reaktors an der Position, an der die Kanäle angeordnet sind. Bevorzugt liegt die Anzahl der Kanäle im nachfolgend definierten Bereich:

$$\frac{U}{4.0m} \leq N_{RL} \leq \frac{U}{1.2m}$$

und insbesondere

$$\frac{U}{3.6m} \le N_{RL} \le \frac{U}{1.8m}.$$

Hierbei ist der Umfang U in Metern einzusetzen und "m" bedeutet Meter.

Neben einer Gestaltung derart, dass die Kanäle der Vorrichtung zur Vertropfung sternförmig angeordnet sind, können diese auch in jeder beliebigen Anordnung zueinander angeordnet sein, beispielsweise parallel zueinander oder sich überschneidend, dass beispielsweise eine Rechteckteilung oder eine Dreiecksteilung durch die Anordnung der Kanäle realisiert wird. Bei einer Dreiecksteilung und einer Rechteckteilung sind jeweils mehrere parallel ausgerichtet Kanäle quer zueinander ausgerichtet, wobei bei einer Rechteckteilung der Winkel zwischen den quer zueinander ausgerichteten Kanäle 90° ist und bei einer Dreiecksteilung vorzugsweise 60°.

Weiterhin ist es bevorzugt, wenn zumindest die Löcher am Rand des Kanals so ausgebildet sind, dass die Monomerlösung in einem Winkel zur Achse des Reaktors aus den Löchern austritt. Durch den Austritt der Monomerlösung in einem Winkel zur Achse des Reaktors kann eine gleichmäßigere Verteilung der Tropfen im Reaktor und ein größerer Abstand der Tropfen aus einem Kanal zueinander erhalten werden. Bei einer sternförmigen Anordnung der Kanäle ist es weiterhin bevorzugt, wenn der Winkel, mit dem die Monomerlösung zur Achse des Reaktors aus den Löchern austritt, von innen nach außen hin zunimmt. Dass die Flüssigkeit in einem Winkel zur Achse des Reaktors austritt, kann entweder durch entsprechende Gestaltung der Löcher, zum Beispiel indem diese in einem Winkel in der Vertropferplatte ausgebildet sind, oder alternativ durch winklige Gestaltung der Vertropferplatte realisiert werden.

Wenn der Winkel, mit dem die Tropfen aus den Löchern austreten über die gesamte Länge der einzelnen Kanäle der Vorrichtung zur Vertropfung konstant ist, so liegt dieser vorzugsweise im Bereich von 0 bis 30°, bevorzugt im Bereich von 0,1 bis 20° und insbesondere im Bereich von 0,2 bis 15°.

Insbesondere bei einer sternförmigen Anordnung der Kanäle ist es bevorzugt, wenn der Winkel, mit dem die Tropfen aus den Löchern austreten mit der Position des Lochs variiert, da der Abstand zwischen zwei Kanälen von der Mitte nach außen hin zunimmt. So ist es vorteilhaft, wenn der Winkel näher zum Mittelpunkt kleiner ist als der Winkel an den äußeren Löchern.

Bevorzugt ist es bei einer sternförmigen Anordnung, wenn der Winkel a, mit dem die Flüssigkeit zumindest aus den Löchern an den radialen Rändern austritt, im nachfolgend definierten Bereich liegt:

$$\frac{r}{N_{LR} \cdot d_P \cdot v^{0.578}} \cdot (0.00697 \cdot r + 0.0332) - 6.296 \le \alpha \le \frac{r}{N_{LR} \cdot d_P \cdot v^{0.578}} \cdot (0.00697 \cdot r + 0.0332) + 4.704,$$

bevorzugt

$$\frac{r}{N_{LR} \cdot d_P \cdot v^{0.578}} \cdot (0.00697 \cdot r + 0.0332) - 4.296 \le \alpha \le \frac{r}{N_{LR} \cdot d_P \cdot v^{0.578}} \cdot (0.00697 \cdot r + 0.0332) + 2.704$$

und besonders bevorzugt

$$\frac{r}{N_{LR} \cdot d_P \cdot v^{0.578}} \cdot (0.00697 \cdot r + 0.0332) - 2.296 \le \alpha \le \frac{r}{N_{LR} \cdot d_P \cdot v^{0.578}} \cdot (0.00697 \cdot r + 0.0332) + 1.704,$$

für den Gültigkeitsbereich

$$0.25m \le r \le 10m$$

$$0.0001m \le d_P \le 0.0015m$$

$$3\tfrac{m}{s} \le v \le 30\tfrac{m}{s}$$

$$3 \leq N_{LR} \leq 18.$$

Hierbei bedeuten r die radiale Position des Lochs in Metern, $N_{LR}$ die Anzahl der Kanäle, $d_p$ der mittlere Tropfendurchmesser in Metern und v die Tropfenaustrittsgeschwindigkeit in Meter pro Sekunde. Der Winkel $\alpha$ der Löcher ergibt sich in Grad. Wenn sich ein Wert kleiner als Null ergibt, so ist anstelle des berechneten Wertes der Wert 0° für den Winkel zu verwenden.

Eine weitere Optimierung des Austrittswinkels der Tropfen bezogen auf die Achse des Reaktors kann durch numerische Simulationsrechnungen erfolgen. Neben einer stetigen Änderung des Austrittswinkels ist es alternativ auch möglich, den Austrittswinkel der Tropfen stufenweise zu ändern. Hierzu wird dann vorzugsweise jeweils der Winkel in der Mitte einer Stufe nach obiger Definition festgelegt.

Für eine einfache Revision der Vorrichtung zur Vertropfung der Monomerlösung, ist es weiterhin bevorzugt, wenn der Kanal an seiner Unterseite mit mindestens einer Vertropferplatte verschlossen ist, in der die Löcher zur Zugabe der Monomerlösung ausgebildet sind. Dies ermöglicht es einerseits, in Abhängigkeit von der Monomerlösung oder der gewünschten Tropfengröße auf einfache Weise zum Beispiel die Austrittswinkel und/oder die Größe der Löcher durch Tausch der Vertropferplatten zu variieren, auf der anderen Seite ist es auch möglich, die Vertropferplatten einfach auszutauschen, um zum Beispiel benutzte Vertropferplatten zu reinigen, wenn diese verschmutzt sind.

Dass die Flüssigkeit in einem Winkel zur Achse des Reaktors aus den Löchern der Vertropferplatten austritt, lässt sich zum Beispiel dadurch realisieren, dass die Vertropferplatten an ihrer Unterseite entlang ihrer Längsachse gewinkelt sind. Bei einer sternförmigen Anordnung der Kanäle und damit der Vertropferplatten führt dies dazu, dass die Flüssigkeit in einem Winkel zu einer durch die Achse des Reaktors verlaufenden Ebene aus den Löchern austritt. Die Löcher, durch die die Monomerlösung in den Reaktor zugegeben wird, sind vorzugsweise in Reihen parallel zur Längsachse der Vertropferplatte angeordnet. Der Winkel, mit dem die Vertropferplatten zur horizontalen ausgerichtet sind, entspricht dabei dem Austrittswinkel der Tropfen aus den Löchern zur senkrechten Achse des Reaktors. Insbesondere bei Einsatz von mehreren Vertropferplatten und einer sternförmigen Anordnung der Kanäle ist es vorteilhaft, wenn bei einer Variation des Austrittswinkels jede Vertropferplatte in einem Kanal einen anderen Winkel aufweist, der von innen nach außen zunimmt und nach obenstehender Definition jeweils in der Mitte der Vertropferplatte bestimmt wird.

Neben einer gewinkelten Gestaltung der Vertropferplatten ist auch eine beliebige andere Gestaltung möglich, bei der die Löcher der Vertropferplatten entlang der Längsachse in der Mitte tiefer liegen als an den Rändern. Dies ist zum Beispiel möglich, wenn die Vertropferplatte in Form eines Kreissegments entlang der Längsachse gebildet wird. Auch ist es zum Beispiel möglich, die Vertropferplatte so zu gestalten, dass diese in der Mitte entlang der Längsachse einen Bereich aufweist, der flach verläuft und die Seitenbereiche links und rechts vom flach verlaufenden Bereich zur Längsachse gewinkelt sind oder in Form eines Bogens gestaltet sind.

Um eine ausreichend große Anzahl an Tropfen zu erzeugen, ist es bevorzugt, wenn die Löcher der Vertropferplatten in mehreren Lochreihen angeordnet sind. Hierbei ist es insbesondere bevorzugt, wenn der Abstand der einzelnen Löcher in einer Lochreihe und der Abstand benachbarter Lochreihen im Wesentlichen gleich groß sind. Ein geeigneter Abstand der Löcher in einer Lochreihe und der Lochreihen zueinander liegt im Bereich von 1 bis 100 mm, bevorzugt im Bereich von 2 bis 50 mm und insbesondere im Bereich von 3 bis 20 mm.

Um Tropfen einer geeigneten Größe für wasserabsorbierende Polymere zu erhalten, ist es weiterhin bevorzugt, wenn die Löcher in den Vertropferplatten einen Durchmesser im Bereich von 25 bis 500 $\mu$m aufweisen.

Ausführungsbeispiele der Erfindung sind in den Figuren dargestellt und werden in der nachfolgenden Beschreibung näher erläutert.

Es zeigen:

Figur 1    einen Längsschnitt durch einen Reaktor zur Tropfenpolymerisation,

Figur 2    einen Längsschnitt durch den Reaktorkopf,

Figur 3    eine Anordnung von Vertropferkanälen in einer ersten Ausführungsform,

Figur 4    eine Anordnung von Vertropferkanälen in einer zweiten Ausführungsform,

Figur 5    eine Anordnung von Vertropferkanälen in einer dritten Ausführungsform,

Figur 6    einen Querschnitt durch einen Vertropferkanal in einer ersten Ausführungsform,

Figur 7    einen Querschnitt durch einen Vertropferkanal in einer zweiten Ausführungsform,

Figur 8     einen Querschnitt durch einen Vertropferkanal in einer dritten Ausführungsform,

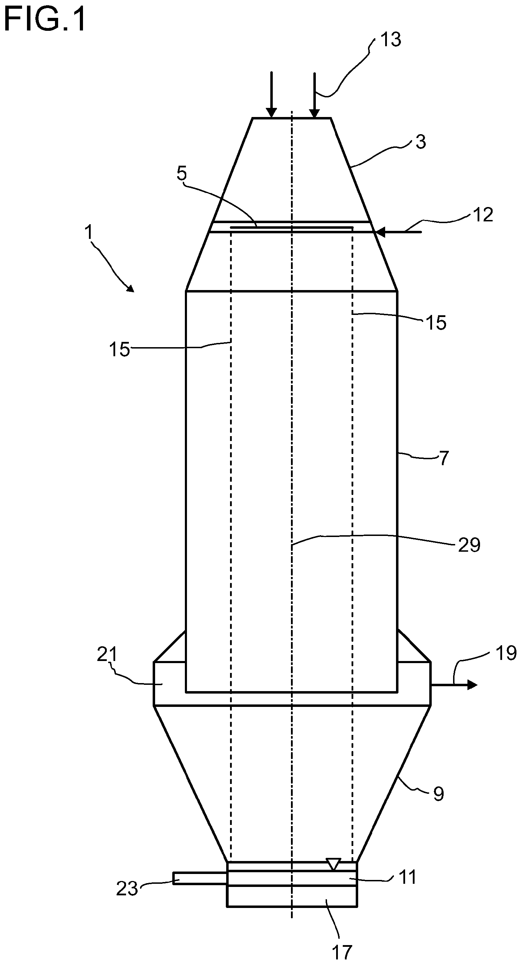

Figur 1 zeigt einen Längsschnitt durch einen erfindungsgemäß ausgebildeten Reaktor.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen.

Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löchern, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 50 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktor prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer außen am konusförmigen Teil des Reaktors vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird eine die Wandung des mittleren Bereichs 7 umlaufende ringförmige Kammer 21 gebildet, in die das Gas einströmt und durch die mindestens eine Gasentnahmestelle 19, die mit der ringförmigen Kammer 21 verbunden ist, abgezogen werden kann.

Die nachreagierten Polymerpartikel der Wirbelschicht 11 werden über eine Produktentnahmestelle 23 im Bereich der Wirbelschicht entnommen.

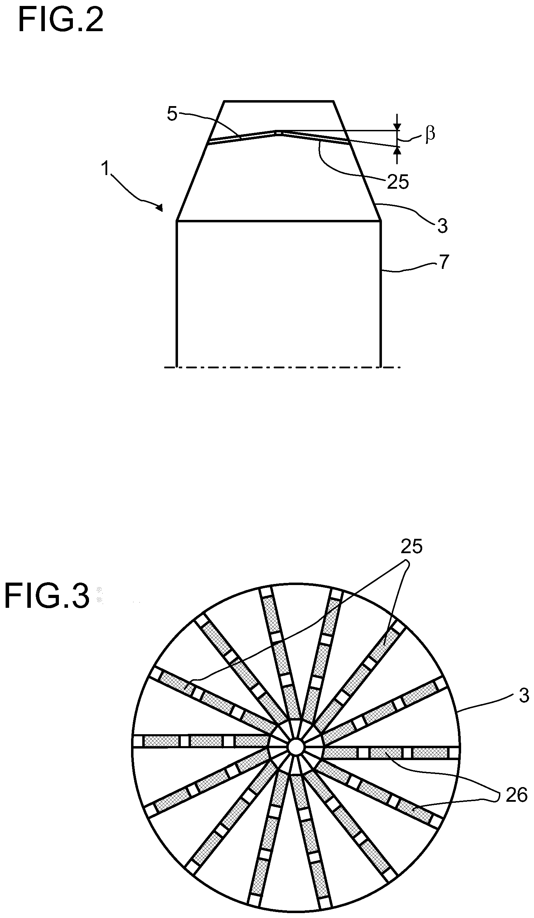

Figur 2 zeigt einen Längsschnitt durch den Reaktorkopf.

Bei der hier dargestellten Ausführungsform ist der Reaktorkopf 3 konisch ausgebildet. Die Vorrichtung zur Vertropfung 5 umfasst einzelne Kanäle 25, die sternförmig von außen zur Mitte des Reaktorkopfs 3 in den Reaktor 3 ragen. Um zu unterstützen, dass die die Vorrichtung zur Vertropfung 5 verlassenden Tropfen nicht an die Wandung des Reaktors 1 prallen, sind die Kanäle in der hier dargestellten Ausführungsform mit einem Winkel β zur Horizontalen im Reaktorkopf 3 angeordnet. Der Winkel β liegt dabei vorzugsweise im Bereich von 0° bis 20°, mehr bevorzugt im Bereich von 0° bis 15°, besonders bevorzugt im Bereich von 0° bis 10° und insbesondere im Bereich von 0° bis 5°. Durch die entsprechende Ausrichtung der Kanäle treten die Tropfen in einem zur Reaktormitte weisenden Winkel aus den Kanälen aus, so dass die Gefahr, dass Tropfen an die Wandung des Reaktors 1 gelangen und dort anbacken können, weiter minimiert wird.

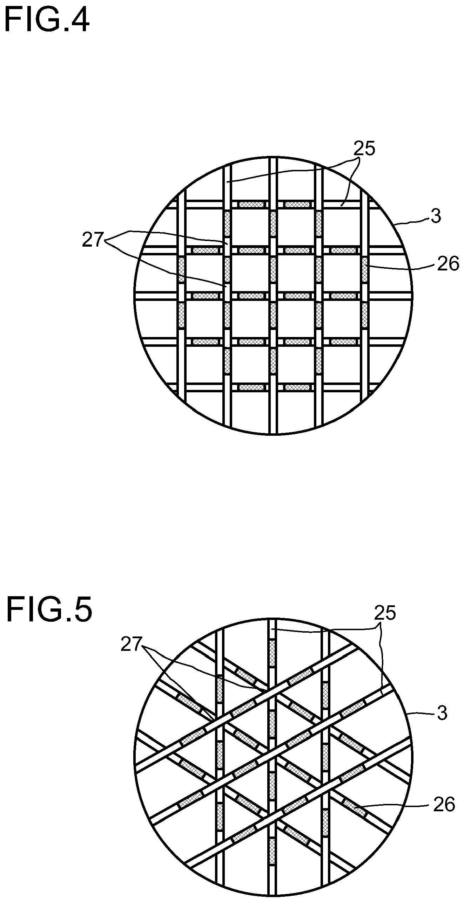

Eine entsprechende sternförmige Anordnung der Kanäle 25 ist in Figur 3 dargestellt. Weitere mögliche Anordnungen der Kanäle zeigen die Figuren 4 und 5. Bei diesen ist allerdings eine Anordnung mit einem Winkel β zur Horizontalen nur schwierig zu realisieren, so dass in diesem Fall die Kanäle 25 vorzugsweise horizontal verlaufen. Figur 4 zeigt eine Anordnung in Rechteckteilung, bei der die einzelnen Kanäle 25 jeweils in einem Winkel von 90° zueinander angeordnet sind, so dass durch die Schnittpunkte 27 der Kanäle jeweils Rechtecke, vorzugsweise Quadrate gebildet werden.

Figur 5 zeigt eine Anordnung in Dreieckteilung. Hier sind die Kanäle 25 jeweils mit einem Winkel von 60° zueinander angeordnet, so dass durch die Schnittpunkte 27 der Kanäle 25 jeweils gleichseitige Dreiecke gebildet werden. Dies setzt allerdings zudem voraus, dass die jeweils parallel verlaufenden Kanäle einen immer gleich großen Abstand aufweisen.

Alternativ zu den hier dargestellten Ausführungsformen ist es selbstverständlich auch möglich, die Kanäle so anzuordnen, dass der Abstand zwischen parallel angeordneten Kanälen variiert oder der Abstand zwischen den parallel angeordneten Kanälen jeweils gleich groß ist, aber die Abstände zwischen den parallel angeordneten Kanälen, die in unterschiedlicher Richtung verlaufen, unterschiedlich sind. Zudem ist es auch möglich, die Kanäle in einem beliebigen anderen Winkel zueinander anzuordnen.

Insbesondere bei einem kreisförmigen Reaktorquerschnitt ist jedoch die in Figur 3 dargestellte sternförmige Anordnung bevorzugt. Hierbei kann jedoch die Anzahl der Kanäle in Abhängigkeit vom Umfang des Reaktors variieren. Zudem ist es möglich, die Kanäle unterschiedlich lang zu gestalten, so dass diese unterschiedlich weit in den Reaktor 1 hineinragen. Dabei ist jedoch immer eine drehsymmetrische Anordnung bevorzugt.

Die Position von Vertropferplatten 26, mit denen die Kanäle zur Zufuhr der Monomerlösung auf ihrer Unterseite abgeschlossen sind, und in denen die Löcher ausgebildet sind, durch die die Monomerlösung in den Reaktor vertropft wird, ist in den Figuren 3 bis 5 durch die gepunkteten Flächen dargestellt.

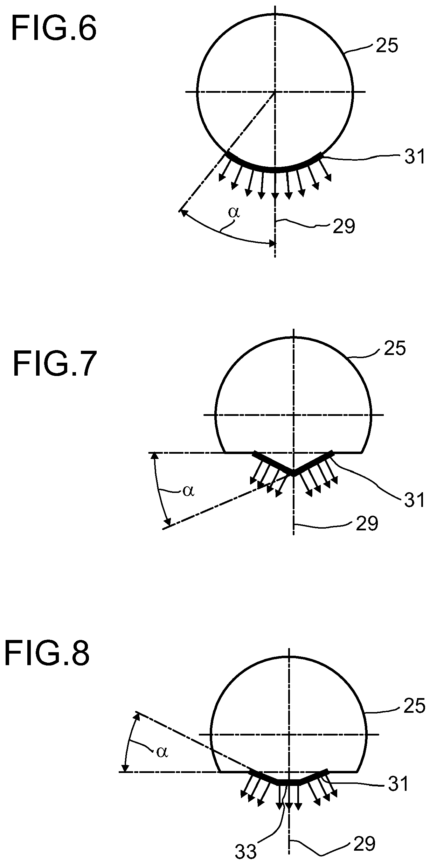

In den Figuren 6, 7 und 8 sind Querschnitte durch die Kanäle 25 in unterschiedlichen Ausführungsformen dargestellt.

Um eine gleichmäßige Tropfenverteilung über den Reaktorquerschnitt zu erhalten, ist es bevorzugt, wenn zumindest die Tropfen, die an den äußeren Löcher in einem Kanal gebildet werden, in einem Winkel zur Senkrechten, das heißt zur Reaktorachse, austreten. Hierzu ist es zum Beispiel möglich, den Bereich des Kanals, in dem die Löcher ausgebildet sind, wie in Figur 6 dargestellt, in Form eines Kreissegments zu gestalten. Hierdurch nimmt der Winkel a, unter dem die Monomerlösung in Bezug auf die Reaktorachse 29 austritt, von der Kanalmitte nach außen hin zu.

Alternativ ist es auch möglich, wie in Figur 7 dargestellt, den Kanalboden, in dem die Löcher ausgebildet sind, in einem Winkel zur Horizontalen auszurichten, wobei bei Bohrungen senkrecht zum Kanalboden 31 der Winkel a, mit dem die Tropfen austreten zur Reaktorachse dem Winkel α des Kanalbodens zur Horizontalen entspricht. Auch ist eine Gestaltung möglich, bei der zusätzlich zu den gewinkelten Bereichen des Kanalbodens 31 ein mittlerer Bodenbereich 33 horizontal verläuft.

Um eine einfache Reinigung der Löcher zu ermöglichen, ist es vorteilhaft, wenn die Löcher in Vertropferplatten ausgebildet sind, die an entsprechend gestalteten Öffnungen im Boden der Kanäle 25 positioniert werden. Die Vertropferplatten können dann zur Reinigung ausgebaut werden und durch saubere Vertropferplatten ersetzt werden. Die Vertropferplatten sind dabei vorzugsweise entweder in Form eines Kreissegments oder gewinkelt gestaltet, damit ein Bodenverlauf des Kanals 25 realisiert werden kann, wie er in den Figuren 6 bis 8 dargestellt ist.

Insbesondere bei einer sternförmigen Anordnung der Kanäle ist es weiterhin bevorzugt, wenn der Winkel, mit dem die Monomerlösung austritt, von der Reaktormitte nach außen hin zunimmt.

Neben dem hier dargestellten kreisförmigen Querschnitt ist es auch möglich, die Kanäle 25 mit einem beliebigen anderen Querschnitt zu gestalten. Insbesondere dann, wenn Vertropferplatten eingesetzt werden, ist es besonders bevorzugt, die Kanäle 25 mit einem rechteckigen Querschnitt auszubilden. In diesem Fall kann der Kanal oben mit einem abnehmbaren Deckel verschlossen werden und die Vertropferplatten können nach Abnehmen des Deckels auf einfache Weise entnommen und ausgetauscht werden.

Bezugszeichenliste

| | |
|---|---|
| 1 | Reaktor |
| 3 | Reaktorkopf |
| 5 | Vorrichtung zur Vertropfung |
| 7 | mittlerer Bereich |
| 9 | unterer Bereich |
| 11 | Wirbelschicht |
| 12 | Monomerzufuhr |
| 13 | Zugabestelle für Gas |
| 15 | Position der äußersten Löcher in Bezug zur Wirbelschicht 11 |
| 17 | Gasverteiler |
| 19 | Gasentnahmestelle |
| 21 | ringförmige Kammer |
| 23 | Produktentnahmestelle |
| 25 | Kanal |
| 26 | Vertropferplatte |
| 27 | Schnittpunkt |
| 29 | Reaktorachse |
| 31 | Kanalboden |
| 33 | mittlerer Bodenbereich |

**Patentansprüche**

1. Vorrichtung zur Herstellung von pulverförmigem Poly(meth)acrylat, umfassend einen Reaktor (1) zur Tropfenpolymerisation mit einer Vorrichtung zur Vertropfung (5) einer Monomerlösung für die Herstellung des Poly(meth)acrylats mit Löchern, durch die die Lösung vertropft wird, einer Zugabestelle für ein Gas (13) oberhalb der Vorrichtung zur Vertropfung (5), mindestens einer Gasentnahmestelle (19) am Umfang des Reaktors (1) und einer Wirbelschicht (11), wobei die äußersten Löcher, durch die die Lösung vertropft wird, so positioniert sind, dass ein senkrecht nach unten fallender Tropfen in die Wirbelschicht (11) fällt und dass der hydraulische Durchmesser auf Höhe der Mitte zwischen der Vorrichtung zur Vertropfung (5) und der Gasentnahmestelle (19) mindestens 10% größer ist als der hydraulische Durchmesser der Wirbelschicht (11), wobei sich der Reaktor (1) oberhalb der Wirbelschicht (11) konusförmig auf seinen maximalen hydraulischen Durchmesser erweitert und die mindestens eine Gasentnahmestelle (19) am Übergang von der konusförmigen Erweiterung oberhalb der Wirbelschicht (11) zur zylindrischen Wandung des Reaktors (1) positioniert ist, wobei der Durchmesser der konusförmigen Erweiterung oberhalb der Wirbelschicht (11) am oberen Ende der Erweiterung größer ist als der Durchmesser der Reaktorwandung oberhalb der konusförmigen Erweiterung, **dadurch gekennzeichnet, dass** die Reaktorwandung in die konusförmige Erweiterung ragt, so dass sich zwischen der konusförmigen Erweiterung und der Reaktorwandung ein ringförmiger Raum ausbildet, an dem die Gasentnahmestelle positioniert ist.

2. Vorrichtung gemäß Anspruch 1, **dadurch gekennzeichnet, dass** der Kopf (3) des Reaktors (1) in Form eines Kegelstumpfs ausgebildet ist und die Vorrichtung zur Vertropfung (5) im kegelstumpfförmigen Kopf (3) des Reaktors (1) positioniert ist.

3. Vorrichtung gemäß Anspruch 1 oder 2, **dadurch gekennzeichnet, dass** das Verhältnis der von der Vorrichtung zur Vertropfung (5) abgedeckten Fläche in dem Reaktor (1) bezogen auf die Fläche, die von einer die äußersten Löcher verbindenden Linie umschlossen wird, kleiner als 50% ist.

4. Vorrichtung gemäß einem der Ansprüche 1 bis 3, **dadurch gekennzeichnet, dass** die Vorrichtung zur Vertropfung (5) der Monomerlösung sternförmig angeordnete Kanäle (25) umfasst, an deren Unterseite die Löcher ausgebildet sind.

5. Vorrichtung gemäß Anspruch 4, **dadurch gekennzeichnet, dass** zumindest die Löcher am Rand des Kanals (25) so ausgebildet sind, dass die Monomerlösung in einem Winkel zur Achse (29) des Reaktors (1) aus den Löchern austritt.

**6.** Vorrichtung gemäß Anspruch 4 oder 5, **dadurch gekennzeichnet, dass** der Kanal (25) an seiner Unterseite mit mindestens einer Vertropferplatte verschlossen ist, in der die Löcher zur Zugabe der Monomerlösung ausgebildet sind.

**7.** Vorrichtung gemäß Anspruch 6, **dadurch gekennzeichnet, dass** die Vertropferplatten an ihrer Unterseite entlang ihrer Längsachse gewinkelt sind.

**8.** Vorrichtung gemäß Anspruch 6 oder 7, **dadurch gekennzeichnet, dass** die Löcher der Vertropferplatten entlang der Längsachse in der Mitte tiefer liegen als an den Rändern.

**9.** Vorrichtung gemäß einem der Ansprüche 6 bis 8, **dadurch gekennzeichnet, dass** die Löcher der Vertropferplatten in mehreren Lochreihen angeordnet sind.

**10.** Vorrichtung gemäß einem der Ansprüche 1 bis 9, **dadurch gekennzeichnet, dass** die Löcher in den Vertropferplatten einen Durchmesser im Bereich von 25 bis 500 µm aufweisen.


**Claims**

**1.** An apparatus for production of pulverulent poly(meth)acrylate, comprising a reactor (1) for droplet polymerization, having an apparatus for dropletization (5) of a monomer solution for the production of the poly(meth)acrylate, having holes through which the solution is dropletized, an addition point for a gas (13) above the apparatus for dropletization (5), at least one gas withdrawal point (19) on the periphery of the reactor (1) and a fluidized bed (11), where the outermost holes through which the solution is dropletized are positioned such that a droplet falling vertically downward falls into the fluidized bed (11) and the hydraulic diameter at the level of the midpoint between the apparatus for dropletization (5) and the gas withdrawal point (19) is at least 10% greater than the hydraulic diameter of the fluidized bed (11), where the reactor (1) widens conically above the fluidized bed (11) to its maximum hydraulic diameter and the at least one gas withdrawal point (19) is positioned at the transition from the conical widening above the fluidized bed (11) to the cylindrical wall of the reactor (1), where the diameter of the conical widening above the fluidized bed (11) is greater at the upper end of the widening than the diameter of the reactor wall above the conical widening, wherein the reactor wall projects into the conical widening so as to form an annular gap in which the gas withdrawal point is positioned between the conical widening and the reactor wall.

**2.** The apparatus according to claim 1, wherein the head (3) of the reactor (1) takes the form of a frustocone and the apparatus for dropletization (5) is positioned in the frustoconical head (3) of the reactor (1).

**3.** The apparatus according to claim 1 or 2, wherein the ratio of the area in the reactor (1) covered by the apparatus for dropletization (5) relative to the area enclosed by a line connecting the outermost holes is less than 50%.

**4.** The apparatus according to any of claims 1 to 3, wherein the apparatus for dropletization (5) of the monomer solution has channels (25) arranged in a star shape, with the holes formed at the base thereof.

**5.** The apparatus according to claim 4, wherein at least the holes at the edge of the channel (25) are formed in such a way that the monomer solution exits from the holes at an angle relative to the axis (29) of the reactor (1).

**6.** The apparatus according to claim 4 or 5, wherein the channel (25) is connected at its base to at least one dropletizer plate in which the holes for addition of the monomer solution are formed.

**7.** The apparatus according to claim 6, wherein the dropletizer plates are angled along their longitudinal axis at the base thereof.

**8.** The apparatus according to claim 6 or 7, wherein the holes of the dropletizer plates along the longitudinal axis are lower in the middle than at the edges.

**9.** The apparatus according to any of claims 6 to 8, wherein the holes of the dropletizer plates are arranged in a plurality of rows of holes.

**10.** The apparatus according to any of claims 1 to 9, wherein the holes in the dropletizer plates have a diameter in the range from 25 to 500 µm.

**Revendications**

1. Dispositif pour la préparation de poly(méth)acrylate pulvérulent, comprenant un réacteur (1) pour la polymérisation en goutte, pourvu d'un dispositif pour former des gouttes (5) d'une solution de monomères pour la préparation du poly(méth)acrylate, présentant des trous à travers lesquels la solution est transformée en gouttes, d'un site d'alimentation en gaz (13) au-dessus du dispositif pour former des gouttes (5), d'au moins un site de prélèvement de gaz (19) à la périphérie du réacteur (1) et d'une couche tourbillonnante (11), les trous les plus externes, à travers lesquels la solution est transformée en gouttes, étant positionnés de manière telle qu'une goutte tombant verticalement vers le bas tombe dans la couche tourbillonnante (11) et le diamètre hydraulique à hauteur du centre entre le dispositif pour former des gouttes (5) et le site de prélèvement de gaz (19) étant supérieur d'au moins 10% au diamètre hydraulique de la couche tourbillonnante (11), le réacteur (1) s'élargissant, au-dessus de la couche tourbillonnante (11), en forme de cône jusqu'à son diamètre hydraulique maximal et ledit au moins un site de prélèvement de gaz (19) étant positionné à la transition de l'élargissement conique au-dessus de la couche tourbillonnante (11) en paroi cylindrique du réacteur (1), le diamètre de l'élargissement conique au-dessus de la couche tourbillonnante (11), en l'extrémité supérieure de l'élargissement, étant supérieur au diamètre de la paroi du réacteur au-dessus de l'élargissement conique, **caractérisé en ce que** la paroi du réacteur pénètre dans l'élargissement conique de manière telle qu'un espace annulaire, au niveau duquel le site de prélèvement de gaz est positionné, se forme entre l'élargissement conique et la paroi du réacteur.

2. Dispositif selon la revendication 1, **caractérisé en ce que** la tête (3) du réacteur (1) est conçue sous forme de cône tronqué et le dispositif pour former des gouttes (5) est positionné dans la tête (3) en forme de cône tronqué du réacteur (1).

3. Dispositif selon la revendication 1 ou 2, **caractérisé en ce que** le rapport de la surface couverte par le dispositif pour former des gouttes (5) dans le réacteur (1) à la surface qui est entourée par une ligne reliant les trous les plus externes est inférieur à 50%.

4. Dispositif selon l'une quelconque des revendications 1 à 3, **caractérisé en ce que** le dispositif pour former des gouttes (5) de la solution de monomères comprend des canaux (25), disposés en forme d'étoile, à la face inférieure desquels les trous sont formés.

5. Dispositif selon la revendication 4, **caractérisé en ce qu'**au moins les trous au bord du canal (25) sont conçus de manière telle que la solution de monomères sort des trous sous un angle par rapport à l'axe (29) du réacteur (1).

6. Dispositif selon la revendication 4 ou 5, **caractérisé en ce que** le canal (25) est fermé, au niveau de sa face inférieure, par au moins une plaque de formation de gouttes, dans laquelle les trous pour l'alimentation en solution de monomères sont formés.

7. Dispositif selon la revendication 6, **caractérisé en ce que** les plaques de formation de gouttes sont coudées au niveau de leur face inférieure le long de leur axe longitudinal.

8. Dispositif selon la revendication 6 ou 7, **caractérisé en ce que** les trous des plaques de formation de gouttes, le long de l'axe longitudinal, au centre, se situent à un niveau plus profond que ceux au niveau des bords.

9. Dispositif selon l'une quelconque des revendications 6 à 8, **caractérisé en ce que** les trous des plaques de formation de gouttes sont agencés en plusieurs rangées de trous.

10. Dispositif selon l'une quelconque des revendications 1 à 9, **caractérisé en ce que** les trous dans les plaques de formation de gouttes présentent un diamètre dans la plage de 25 à 500 µm.

# FIG.1

FIG.2

β

5

1

25

3

7

FIG.3

25

3

26

# FIG.4

# FIG.5

FIG.6

25

31

α

29

FIG.7

25

α

31

29

FIG.8

25

α

31

33

29

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A